(19) Europäisches Patentamt
European Patent Office
Office européen des brevets

(11) **EP 4 250 603 A1**

(12) **EUROPEAN PATENT APPLICATION**
published in accordance with Art. 153(4) EPC

(43) Date of publication:
**27.09.2023 Bulletin 2023/39**

(21) Application number: **21893736.5**

(22) Date of filing: **02.11.2021**

(51) International Patent Classification (IPC):
***H04J 13/00*** *(2011.01)*

(52) Cooperative Patent Classification (CPC):
Y02D 30/70

(86) International application number:
**PCT/CN2021/128035**

(87) International publication number:
**WO 2022/105588 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2020 CN 202011303407**

(71) Applicants:
• **Wuxi Cmostek Microelectronics Co., Ltd.**
  **Wuxi, Jiangsu 214000 (CN)**

• **Shen Zhen Hope Microelectronics Co., Ltd.**
  **Shenzhen, Guangdong 518000 (CN)**

(72) Inventors:
• **DU, Fanping**
  **Wuxi, Jiangsu 214000 (CN)**
• **DENG, Jianyuan**
  **Wuxi, Jiangsu 214000 (CN)**

(74) Representative: **Petraz, Gilberto Luigi et al**
  **GLP S.r.l.**
  **Viale Europa Unita, 171**
  **33100 Udine (IT)**

(54) **MICRO-FREQUENCY HOPPING METHOD AND MICRO-FREQUENCY HOPPING MULTIPLE ACCESS COMMUNICATION SYSTEM**

(57) Disclosed are a micro-frequency-hopping method and a micro-frequency-hopping multiple access communication system. The micro-frequency-hopping method comprises: performing frequency hopping on a time domain baseband signal by taking a subcarrier frequency point as the basic unit in a frequency domain direction and taking a sampling point as the basic unit in a time domain direction. The micro-frequency-hopping multiple access system comprises: a baseband signal of a single user for micro-frequency-hopping being a baseband signal comprising only one subcarrier in one symbol; and performing micro-frequency-hopping on the baseband signal, comprising only one subcarrier in one symbol, of each user by using preset unrelated micro-frequency-hopping patterns among a plurality of users.

FIG. 3

EP 4 250 603 A1

## Description

### CROSS-REFERENCE TO RELATED APPLICATIONS

The present disclosure claims the priority of the patent application No. 202011303407.3, filed to the CNIPA on November 19, 2020 and titled "micro-frequency-hopping method and micro-frequency-hopping multiple access communication system", the entire contents of which are hereby incorporated by reference.

### TECHNICAL FIELD

The present disclosure generally relates to the technical field of communication, specifically to a micro-frequency-hopping method and micro-frequency-hopping multiple access communication system.

### BACKGROUND

During World War II, movie queen "Hedy Lamarr" was inspired by the piano and proposed a frequency hopping communication technology, which improved the noise immunity and concealment of communication. Based on this, various frequency hopping and spread spectrum technologies such as CDMA and OFDMA become the mainstream of modern communication technologies, such as common 4G and WIFI.

However, the granularity of the time and frequency of the traditional frequency hopping technology is relatively large. For example, 4G OFDMA uses the time-frequency resource block (RB) as the basic unit for frequency hopping, and does not utilize the frequency hopping technology to the greatest extent.

On the other hand, although the current OFDM technology has greatly improved the spectrum efficiency, due to the high peak- to-average ratio among others, the power amplifier efficiency is low, and it is not suitable for current low-power applications such as the Internet of Things. Therefore, the main communication methods currently used in the field are constant envelope technologies such as mFSK and chirp spread spectrum proposed by LoRa.

However, the current mFSK and the chirp spread spectrum proposed by Lora are both a spread spectrum technology that monopolizes spectrum. When multiple users use the channel at the same time, conflicts will occur and the spectrum cannot be shared. In other words, the constant envelope technologies currently used by the Internet of Things do not make full use of the spectrum resources. Taking Rola's chirp spread spectrum as an example, in order to avoid multi-user conflicts, the LoRa physical layer itself provides FHSS technology. In addition, some application vendors adopt carrier monitoring and conflict detection mechanisms. For example, patent application No. CN109526064A uses monitoring technology. Some other application vendors use time division multiplexing methods. For example, patent application No. CN110278617A uses time division multiple access. However, due to the limitation of exclusive spectrum of chirp spread spectrum signal, the above methods cannot solve the problem of low spectrum efficiency essentially, and the networking has an increased complexity.

### SUMMARY

In a first aspect, the present disclosure relates to a micro-frequency-hopping method, the method comprising:

dividing a baseband time-frequency resource in frequency domain direction with a subcarrier frequency point as a basic unit and in time domain direction with a sampling point as a basic unit; and
performing frequency hopping on a time domain baseband signal with the subcarrier frequency point as the basic unit in the frequency domain direction and with the sampling point as the basic unit in the time domain direction, wherein
the frequency hopping with the subcarrier frequency point as the basic unit in the frequency domain direction comprising:
a frequency hopping range of the time domain baseband signal being any subcarrier frequency point within a baseband bandwidth; and
the frequency hopping with the sampling point as the basic unit in the time domain direction comprising:
performing frequency hopping with each sampling point of each symbol of the time domain baseband signal independently.

In some embodiments, the micro-frequency-hopping method further includes:
performing micro-frequency-hopping at a sending end, comprising:

the signal before the micro-frequency-hopping at the sending end being a time domain subcarrier signal transformed from the frequency domain baseband signal, and

performing micro-frequency-hopping on the time domain subcarrier signal with the sampling point as the unit according to a preset micro-frequency-hopping pattern;

wherein the micro-frequency-hopping pattern refers to a time-frequency resource occupancy pattern in a time-frequency resource matrix consisting of all subcarrier frequency points within the baseband bandwidth and all sampling points within a symbol time, and wherein any of the sampling points occupies and only uses one subcarrier frequency point.

In some embodiments, the micro-frequency-hopping method further includes:

performing de-micro-frequency-hopping at a receiving end, comprising:

performing de-micro-frequency-hopping on the received time domain baseband sampling signal with the sampling point as the unit according to the preset micro-frequency-hopping pattern at the receiving end, and

further transforming the time domain signal after the de-micro-frequency-hopping into the frequency domain baseband signal.

In some embodiments, said micro-frequency-hopping on the time domain subcarrier signal with the sampling point as the unit according to the preset micro-frequency-hopping pattern in the time domain comprises:

performing a dot product between each sampling point of the subcarrier signal before the micro-frequency-hopping and the micro-frequency-hopping signal generated according to the preset micro-frequency-hopping pattern, or rotating each sampling point of the subcarrier signal before the micro-frequency-hopping by a micro-frequency-hopping angle generated according to the preset micro-frequency-hopping pattern;

wherein the micro-frequency-hopping angle refers to an angle obtained by multiplying the subcarrier frequency point and the sampling time point according to the micro-frequency-hopping pattern, and the micro-frequency-hopping signal refers to a complex signal based on the micro-frequency-hopping angle.

In some embodiments, said de-micro-frequency-hopping on the received time domain baseband sampling signal with the sampling point as the unit according to the preset micro-frequency-hopping pattern comprises:

performing a dot product between each sampling point of the received time domain baseband signal and a conjugate of the micro-frequency-hopping signal generated according to the preset micro-frequency-hopping pattern, or reversely rotating each sampling point of the received time domain baseband signal by the micro-frequency-hopping angle according to the preset micro-frequency-hopping pattern.

In some embodiments, the micro-frequency-hopping and de-micro-frequency-hopping according to the preset micro-frequency-hopping pattern further comprises:

superimposed use of the micro-frequency-hopping pattern, continuous use of the micro-frequency-hopping pattern and extended use of the micro-frequency-hopping pattern;

the superimposed use of the micro-frequency-hopping pattern comprises:

performing micro-frequency-hopping on multiple subcarrier signals of one symbol using the respective micro-frequency-hopping patterns at the sending end, and performing de-micro-frequency-hopping on the received sampling signal of one symbol using multiple different micro-frequency-hopping patterns at the receiving end, or performing micro-frequency-hopping on a subcarrier signal of one symbol using multiple micro-frequency-hopping patterns at the sending end, and performing de-micro-frequency-hopping on the received sampling signal of one symbol using different micro-frequency-hopping patterns at the receiving end;

the continuous use of the micro-frequency-hopping pattern comprises:

performing micro-frequency-hopping on the subcarrier signal of one symbol using multiple micro-frequency-hopping patterns continuously in multiple at the sending end; and

performing de-micro-frequency-hopping on the received sampling signal of one symbol using multiple micro-frequency-hopping patterns continuously in multiple at the receiving end; and

the extended use of the micro-frequency-hopping pattern comprises:

performing micro-frequency-hopping on the subcarrier signal of multiple symbols using different micro-frequency-hopping patterns at the sending end; and

performing de-micro-frequency-hopping on the received sampling signal of continuous symbols using different micro-frequency-hopping patterns at the sending end.

In the second aspect, the present disclosure relates to a micro-frequency-hopping multiple access communication system, which uses the method described in the present disclosure to perform micro-frequency-hopping and de-micro-frequency-hopping on communication signals. In the system,

a baseband signal of a single user for micro-frequency-hopping is a baseband signal comprising only one subcarrier in one symbol;

performing micro-frequency-hopping on the baseband signal, comprising only one subcarrier in one symbol, of each user using preset uncorrelated micro-frequency-hopping patterns among multiple users;

sending the micro-frequency-hopping signals that use the preset uncorrelated micro-frequency-hopping patterns for micro-frequency-hopping at any time at the sending ends of the multiple users; and

performing de-micro-frequency-hopping using respective micro-frequency-hopping patterns at the respective receiving ends of the multiple users, to obtain the related time domain signals corresponding to the micro-frequency-hopping signals at the respective sending ends;

wherein said sending at any time at the sending ends of the multiple users comprises:

sending the micro-frequency-hopping signals of the multiple users at a base station side simultaneously, and

sending the micro-frequency-hopping signals of the multiple users at a base station side independently, and

sending the micro-frequency-hopping signals of the multiple users at a terminal side independently;

wherein said baseband signal comprising only one subcarrier in one symbol comprises a baseband mFSK signal.

In some embodiments, the uncorrelated micro-frequency-hopping signals include:

performing linear micro-frequency-hopping on said baseband mFSK signal to obtain uncorrelated ZC sequence signals, wherein

said uncorrelated ZC sequence signals comprise all ZC sequence signals root values of which are prime to lengths of the ZC sequence signal;

when performing the linear micro-frequency-hopping, the subcarrier frequency points in the micro-frequency-hopping pattern vary in a linear law, with the sampling points in a normal order or being shift.

In some embodiments, the uncorrelated micro-frequency-hopping signals include:

performing pseudo-random micro-frequency-hopping on the baseband mFSK signal to obtain uncorrelated pseudo-random micro-frequency-hopping signals,

wherein the pseudo-random micro-frequency-hopping refers to that when performing the micro-frequency-hopping, the subcarrier frequency points in the micro-frequency-hopping pattern vary in a pseudo-random law, with the sampling points in a normal order, being shift or a pseudo-random order.

In some embodiments, the pilot signal of the micro-frequency-hopping multi-user communication system adopts uncorrelated ZC sequence signals generated by mFSK linear micro-frequency-hopping for time-frequency estimation at the receiving end;

data signal(s) of the micro-frequency-hopping multi-user communication system adopt uncorrelated ZC sequence signals generated by mFSK linear micro-frequency-hopping or uncorrelated pseudo-random signals generated by mFSK pseudo-random micro-frequency-hopping.

Some embodiments of the micro-frequency-hopping technology disclosed herein can utilize the spectrum resources more efficiently and flexibly, especially realizing a conflict-free mFSK micro-frequency-hopping multiple access communication, which improves the spectrum efficiency essentially, and simplifies the complexity of networking.

**BRIEF DESCRIPTION OF THE DRAWINGS**

FIG. 1 shows a schematic diagram of time-frequency resource division of an OFDM system according to an embodiment of the present disclosure;

FIG. 2 shows a schematic diagram of micro-frequency-hopping time-frequency resource division according to an embodiment of the present disclosure;

FIG. 3 shows a schematic diagram of a micro-frequency-hopping pattern according to an embodiment of the present disclosure;

FIG. 4 shows a block diagram of a micro-frequency-hopping system according to an embodiment of the present disclosure;

FIG. 5 shows a schematic diagram of a micro-frequency-hopping frequency shift in a multi-carrier OFDM system according to an embodiment of the present disclosure; and

FIG. 6 shows a schematic diagram of a chirp signal equivalent to a micro-frequency-hopping mode according to an embodiment of the present disclosure.

## DESCRIPTION OF THE EMBODIMENTS

In order to make the purpose, technical solutions and advantages according to the embodiments of the present disclosure apparent, the technical solutions according to the embodiments of the present disclosure will be clearly and completely described below in conjunction with the drawings according to the embodiments of the present disclosure. Obviously, the described embodiments are some embodiments of the present disclosure, not all of the embodiments. Based on the embodiments of the present disclosure, all other embodiments obtained by the skilled person in the art without making creative efforts fall into the protection scope of the present disclosure.

In order to describe the key content of the present disclosure clearly and effectively, some concepts, terms and methods of some OFDM systems are recited here.

First, regarding the division of baseband time-frequency resources, in the present disclosure, the baseband time-frequency resources are divided in the frequency domain direction by subcarrier frequency point as the basic unit, and in the time domain direction by sampling point as the basic unit.

The concepts of subcarrier frequency point and sampling point are similar to an OFDM system, wherein the subcarrier frequency point is a frequency domain concept, which is the minimum resolution unit of frequency on the baseband bandwidth, and the subcarrier signals on any two subcarrier frequency points are orthogonal. The sampling point is a time domain concept, which is the minimum resolution unit of time on the time domain baseband signal, and the number of sampling points in one symbol time without a cyclic prefix is the same as the maximum number of subcarriers in the baseband bandwidth (here the baseband bandwidth is the same as the sampling bandwidth).

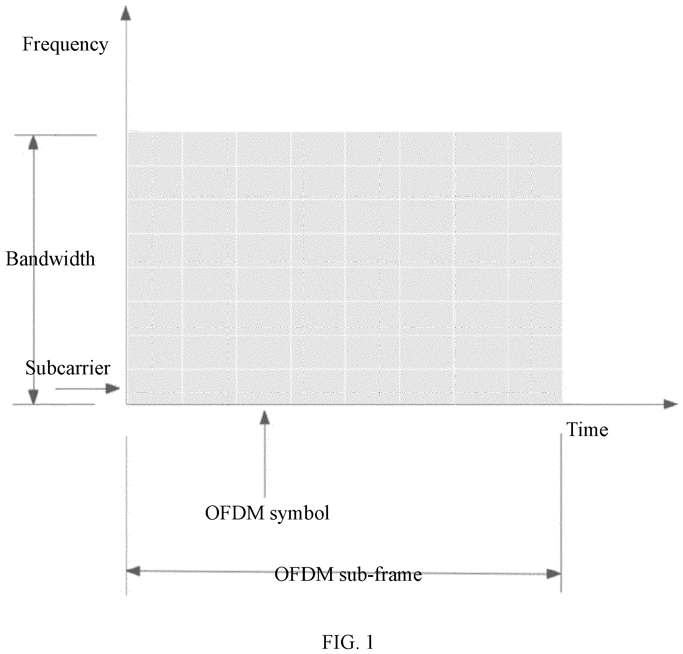

The OFDM system stipulates that the smallest time-frequency resource management unit is RE, which is a time-frequency resource consisting of a subcarrier frequency point in the frequency domain and a symbol in the time domain, as shown in FIG. 1. In other words, the time-frequency resource of the OFDM system is divided in the frequency domain direction with the subcarrier as the basic unit and in the time domain direction with the symbol as the basic unit. In essence, although the minimum resolution unit in the time domain of the OFDM system is the sampling point, for the sake of the orthogonality of the subcarrier signals, the subcarrier signals can only use the symbol as the minimum management unit in the time domain direction.

In fact, facing the specific applications such as multiple access and frequency hopping, in order to simplify the time-frequency resource scheduling, the OFDM system uses a larger time-frequency resource block RB as the basic unit for scheduling. The constitution of RB will not be described here in detail.

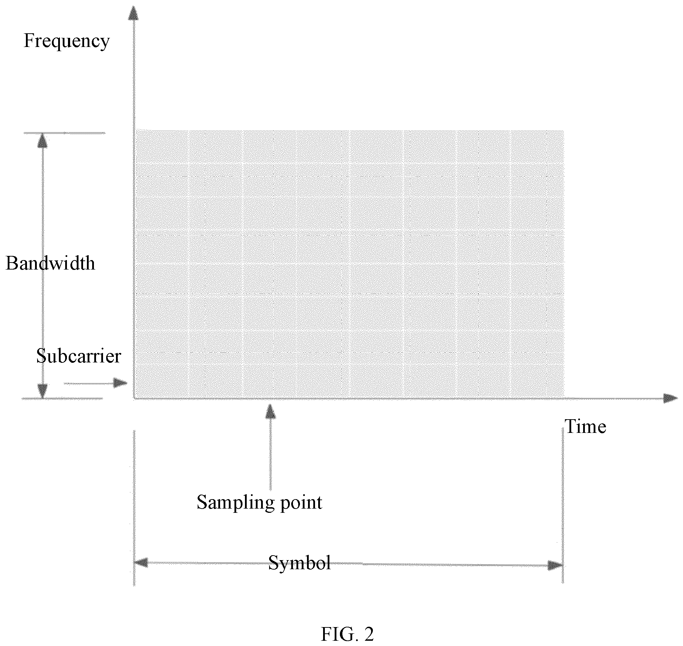

Compared with the OFDM system, the time-frequency resource management of the present disclosure is further divided in the time domain direction, so that the minimum management unit of the baseband time-frequency resource is divided into each sampling point of each subcarrier, as shown in FIG. 2.

On this basis, the present disclosure proposes a micro-frequency-hopping method, the key of which is to perform frequency hopping on the time domain baseband signal in the frequency domain direction with the subcarrier frequency point as the basic unit and in the time domain direction with the sampling point as the basic unit.

The frequency hopping regarding the micro-frequency-hopping in the frequency domain direction with the subcarrier frequency point as the basic unit involves a frequency hopping interval in the frequency domain of the subcarrier frequency point and a frequency hopping range of all subcarrier frequency points within the baseband bandwidth. The frequency hopping regarding the micro-frequency-hopping in the time domain direction with the sampling point as the basic unit refers to that frequency hopping can be performed on all sampling points within one symbol of the time domain baseband signal independently.

The following will introduce in detail from the sending and receiving processes.

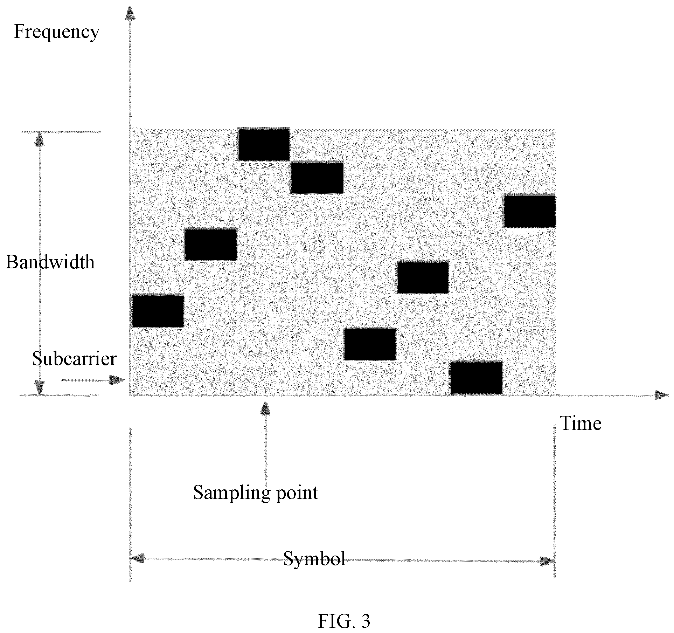

At the sending end, the micro-frequency-hopping process is as follows. Similar to the OFDM system, the initial baseband signal is considered as a frequency domain signal at each subcarrier frequency point, which is transformed into a time domain subcarrier signal through time-frequency inverse transformation, such as IFFT (which essentially maps the frequency domain subcarrier frequency point signal to the time domain subcarrier signal). These steps are the same as the traditional OFDM system. The micro-frequency-hopping differs from the traditional OFDM system in that further micro-frequency-hopping is performed on the time domain subcarrier signal with the sampling point as the unit according to a preset micro-frequency-hopping pattern, wherein the micro-frequency-hopping pattern refers to a time-frequency resource occupancy pattern in the time-frequency resource matrix consisting of all subcarrier frequency points within the baseband bandwidth range and all sampling points within a symbol time range, and wherein any of the sampling points occupies and only uses one subcarrier frequency point. The micro-frequency-hopping pattern is schematically shown in FIG. 3.

In some embodiments, the micro-frequency-hopping at the sending end can be performed by doing a dot product between each sampling point of the time domain subcarrier signal before the micro-frequency-hopping and the micro-frequency-hopping signal generated from the preset micro-frequency-hopping pattern, or by rotating each sampling point of the subcarrier signal before the micro-frequency-hopping by the micro-frequency-hopping angle generated from the preset micro-frequency-hopping pattern.

The micro-frequency-hopping angle refers to an angle obtained by multiplying the subcarrier frequency point and the sampling time point according to the micro-frequency-hopping pattern, and the micro-frequency-hopping signal refers to a complex signal based on the micro-frequency-hopping angle.

Since the phase of the subcarrier signal at each moment is the product of time and frequency, and the micro-frequency-hopping performs phase superposition on the basis of the original phase of the signal according to the product of the frequency and time of the micro-frequency-hopping pattern, the micro-frequency-hopping can also be considered as a kind of signal phase scrambling.

In some embodiments, the micro-frequency-hopping pattern, the micro-frequency-hopping angle, and the micro-frequency-hopping signal can be exemplified by pseudocode as follows:

First, assuming that hoppingPattern refers to the frequency hopping pattern in the frequency domain and hoppingT refers to the frequency hopping pattern in the time domain, these two patterns are arbitrary or random. The formula is as follows (in this example, the time is only shifted randomly):

$$\text{hoppingPattern} = (\ \text{randperm}\ (M)\text{-1-randi}([0,M\text{-}1]))/M; \quad (1)$$

$$\text{hoppingT} = (\ (0:M\text{-}1)\text{-randi}\ ([0,M\text{-}1])); \quad (2)$$

$$\text{hoppingTheta} = \text{hoppingPattern}.*\text{hoppingT}*K; \quad (3)$$

$$\text{hoppingSignal} = \exp(1i*2*pi*\text{hoppingTheta}); \quad (4)$$

among them, M is the number of time-frequency points, pi is the circumference ratio, li is an imaginary unit, exp is an exponential function, randperm is a random sorting function, randi is a random integer function, K is a configurable coefficient for increasing the flexibility, hoppingTheta is the micro-frequency-hopping angle, and the hoppingSignal is the micro-frequency-hopping signal.

Simply, micro-frequency-hopping refers to a process of further dispersing the subcarrier signals of the traditional OFDM system on all possible subcarrier frequency points within the baseband bandwidth with the sampling point as the unit. Therefore, similar to the traditional frequency hopping, micro-frequency-hopping also has the effects of anti-single-tone interference (or anti-frequency selective fading) and signal confidentiality. In addition, although the signal no longer has the orthogonality of subcarrier signals after micro-frequency-hopping, this orthogonality can be recovered by de-micro-frequency-hopping.

At the receiving end, the de-micro-frequency-hopping process is as follows. First, at the receiving end, de-micro-frequency-hopping is performed on the received time domain baseband sampling signal with the sampling point as the unit according to the preset micro-frequency-hopping pattern, and then the time domain signal subjected to the de-micro-frequency-hopping is further transformed into frequency domain baseband signal by time-frequency transformation, such as FFT (which essentially refers to a projection between the received signal and the orthogonal subcarrier signal set).

In some embodiments, the de-micro-frequency-hopping process at the receiving end can be performed by doing a dot product between each sampling point of the received time domain baseband signal and the conjugate of the micro-frequency-hopping signal generated from the preset micro-frequency-hopping pattern, or by reversely rotating the received each sampling point of the time domain baseband signal by the micro-frequency-hopping angle generated from the preset micro-frequency-hopping pattern.

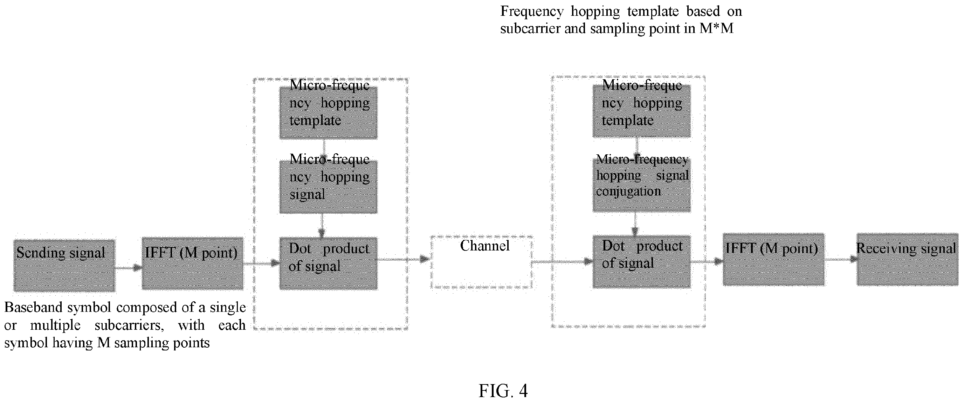

In some embodiments, a micro-frequency-hopping system is shown in FIG. 4, including a micro-frequency-hopping at the sending end and a de-micro-frequency-hopping at the receiving end.

In the micro-frequency-hopping system, the micro-frequency-hopping can have the following applications:

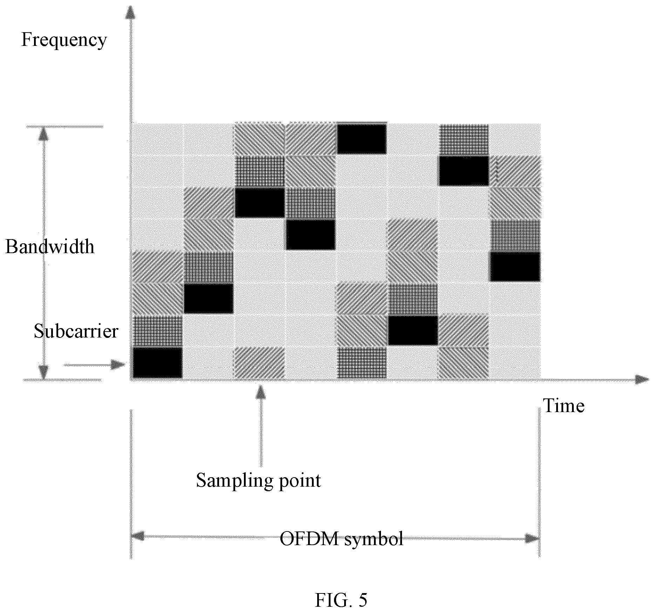

In the first aspect, the micro-frequency-hopping is defined as superimposed use of micro-frequency-hopping patterns. For example, in a traditional OFDM system, there may be multiple subcarriers in one symbol, so that micro-frequency-hopping can be performed on multiple subcarriers at the sending end using a micro-frequency-hopping pattern, as shown in FIG. 5, which can be regarded as a frequency offset pattern, and then de-micro-frequency-hopping is also performed on the corresponding receiving end using a micro-frequency-hopping pattern. It is also possible that multiple subcarriers at the sending end use different micro-frequency-hopping patterns for micro-frequency-hopping, for example, to send to multiple users or multiple streams, and then the receiving end uses different corresponding micro-frequency-hopping patterns for de-micro-frequency-hopping. It is also possible that a certain subcarrier within a symbol at the sending end uses different micro-frequency-hopping patterns for micro-frequency-hopping, for example, broadcasting, and then multiple receiving ends use different micro-frequency-hopping patterns to perform de-micro-frequency-hopping on the received signal.

In the second aspect, the micro-frequency-hopping is defined as continuous use of micro-frequency-hopping patterns. That is, the subcarrier signal within one symbol at the sending end uses multiple micro-frequency-hopping patterns for multiple consecutive micro-frequency-hopping, and correspondingly, the receiving end uses multiple micro-frequency-hopping patterns for multiple consecutive de-micro-frequency-hopping for the received sampling signals of one symbol. For example, the chirp spread spectrum signal can be regarded as a linear micro-frequency-hopping of the mFSK signal, and the chirp signal itself can continue micro-frequency-hopping.

The above superimposed use can be regarded as the addition of the micro-frequency-hopping patterns; the continuous use can be regarded as the multiplication of the micro-frequency-hopping patterns, which satisfies the commutative law, that is, the order of the micro-frequency-hopping patterns used continuously at the sending end and the receiving end does not matter.

In the third aspect, the micro-frequency-hopping is defined as extended use of micro-frequency-hopping patterns. The subcarrier signals of continuous symbols at the sending end use different micro-frequency-hopping patterns for micro-frequency-hopping; the receiving end uses different micro-frequency-hopping patterns for de-micro-frequency-hopping on the received sampling signals of continuous symbols. For example, in order to increase confidentiality, 3 continuous symbols incorporate 3 different micro-frequency-hopping patterns into a large micro-frequency-hopping pattern.

The micro-frequency-hopping can have other using methods. The above are just some specific cases. Any frequency hopping on the time domain baseband signal with the subcarrier frequency point as the basic unit in the frequency domain direction and the sampling point as the basic unit in the time domain direction falls into the present disclosure.

On the basis of the micro-frequency-hopping system, the present disclosure proposes a micro-frequency-hopping multiple access communication system in which one symbol only contains one subcarrier, in order to solve the problem of inefficiency spectrum and complex networking in the field of wide area Internet of Things with low power consumption.

The reason for providing a system in which one symbol only contains one subcarrier signal is that this signal (in some embodiments, mFSK baseband signal) has a constant envelope and low power consumption and is suitable for the field of the Internet of Things.

mFSK is the spread spectrum technology of FSK. mFSK can be regarded as an OFDM system comprising only one subcarrier signal in one symbol, which is a communication method for Internet of Things communication in some embodiments due to its constant envelope, low power consumption and high signal sensitivity, in spite of its very low spectrum efficiency. However, due to the fixed sub-carrier, mFSK has a poor anti-single-tone interference, and it monopolizes the spectrum.

The chirp spread spectrum signal used by LoRa is a linear sweep signal. The chirp spread spectrum disperses the signal of one symbol over the entire frequency band, so the anti-interference ability has been improved, but the chirp spread spectrum signal also monopolizes the spectrum.

The chirp baseband signal can be described in pseudocode as follows:

$$\text{chirpPattern} = -((-M/2:M/2-1))/M; \qquad (5)$$

$$\text{chirpT} = (-M/2:M/2-1); \qquad (6)$$

$$chirpTheta = chirpPattern.*chirpT/2; \qquad (7)$$

$$chirpSignal = \exp(1i*2*pi*chirpTheta); \qquad (8)$$

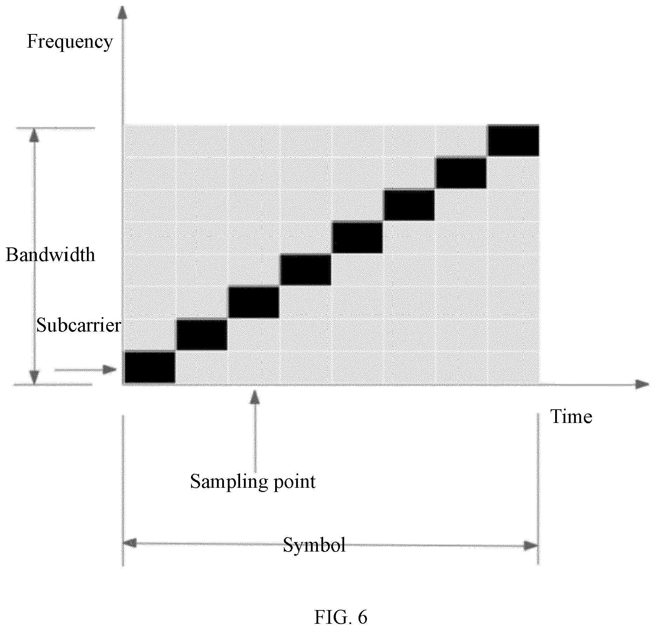

Comparing formulas (5), (6) with formulas (1) and (2), it can be seen that the chirp signal can be regarded as a specific case of a micro-frequency-hopping pattern, that is, a pattern that performs micro-frequency-hopping in a linear manner. As shown in FIG. 6, the linear micro-frequency-hopping means that when micro-frequency-hopping is performed, subcarrier frequency points in the micro-frequency-hopping pattern change linearly, with the sampling points in a normal order or being shift.

Since delaying the chirp signal in the time domain is equivalent to the shift in the frequency domain, LoRa's chirp spread spectrum technology can be regarded as the mFSK baseband signal using a linear micro-frequency-hopping pattern for micro-frequency-hopping.

In some embodiments, the ZC sequence signal can also be regarded as a specific case of the micro-frequency-hopping on the mFSK baseband signal, and the ZC sequence signal formula is as follows:

$$ZC(m) = \exp(-1i*pi*R*m*(m+1)/M), \text{ for } m=0,...,M-1 \qquad (9)$$

here, R is an integer prime to M, i.e., the root value of the ZC sequence.

It can be seen that the ZC sequence signal can also be considered as a linear micro-frequency-hopping. Therefore, it has similar properties to the chirp signal and can be used for time-frequency synchronization. Moreover, since the ZC sequence signals with different R values are not related to each other, a variety of uncorrelated ZC sequence signals can be generated.

It can be seen that chirp and uncorrelated ZC sequence signals can be generated by micro-frequency-hopping on the mFSK baseband signal, and the micro-frequency-hopping pattern is arbitrary, so that the micro-frequency-hopping method unifies constant envelope communication technologies such as mFSK, chirp and ZC, or baseband mFSK signals, chirp signals and ZC sequence signals are just some specific cases of micro-frequency-hopping signals.

In some embodiments, the uncorrelated ZC sequence generated by this mFSK micro-frequency-hopping can realize conflict-free mFSK micro-frequency-hopping multiple access. The principle is that within the uncorrelated ZC sequence signals sent simultaneously, only the ZC sequence signals having the same R value as the ZC sequence signal at the receiving end can correlate to a peak value, and the correlation values of other uncorrelated ZC sequence signals do not involve a peak value, which is equivalent to noise interference.

Moreover, as mentioned above, the ZC sequence signal can be used for time-frequency estimation at the receiving end. Therefore, a conflict-free multiple access communication system can be realized by spread spectrum of this kind of uncorrelated ZC sequence signal.

In some embodiments, in a ZC sequence of a certain length, the number of uncorrelated ZC sequence signals is limited, without fully utilizing the channel resources. Provided with the non-correlation, a conflict-free communication is possible. Therefore, more uncorrelated signals can be constructed, such as pseudo-random signals. Uncorrelated pseudo-random micro-frequency-hopping signals can be obtained by performing pseudo-random micro-frequency-hopping on the baseband mFSK signal, wherein the pseudo-random micro-frequency-hopping refers to that when performing micro-frequency-hopping, the subcarrier frequency points in the micro-frequency-hopping pattern change in a pseudo-random law, with the sampling points in a normal order, being shift or in a pseudo-random order.

As an example, the pseudo-random micro-frequency-hopping pattern in the time domain or the frequency domain may adopt quadratic congruential pseudo-randomization, but it is not forbidden to adopt other pseudo-random mechanisms.

It is expressed with pseudocode as follows:

for i=0:M-1

$$hoppingPattern(i)=\bmod(x0+x1*i+x2*i^2,M); \qquad (10)$$

end here, x0 is an arbitrary offset, x1 is an odd number, and x2 is an even number.

Compared with the traditional multiple access methods, mFSK micro-frequency-hopping multiple access is a two-dimensional multiple access. For example, CDMA which is code division multiple access and OFDM which is essentially frequency division multiplexing are both one-dimensional multiple access. However, mFSK micro-frequency-hopping multiple access can be controlled in both the frequency domain and the time domain independently to generate uncorrelated micro-frequency-hopping signals, with a higher spectrum efficiency and being more flexible.

Pseudo-random micro-frequency-hopping sequences cannot be used for time-frequency estimation, but can only be used for spread spectrum of part of the data signals. Therefore, in design of a micro-frequency-hopping multi-user communication system, the pilot signals can adopt the uncorrelated ZC sequence signals generated by mFSK linear micro-frequency-hopping for time-frequency estimation at the receiving end, and the data signals of the micro-frequency-hopping multi-user communication system can use uncorrelated ZC sequence signals generated by mFSK linear micro-frequency-hopping, or use uncorrelated pseudo-random signals generated by mFSK pseudo-random micro-frequency-hopping.

As mentioned above, in addition to the properties of constant envelope and anti-single-tone interference, the signals using mFSK micro-frequency-hopping can further use the non-correlation of micro-frequency-hopping patterns to realize conflict-free mFSK micro-frequency-hopping multiple access. Conflict-free means that multiple users can use uncorrelated micro-frequency-hopping patterns to send micro-frequency-hopping signals at any time, regardless of whether there are other users sending data. When used at the base station side, without considering the power consumption of the base station, multi-user signals can be sent simultaneously or independently. When used at the terminal side, considering the low power consumption, the signals are generally sent independently.

This kind of non-conflict mFSK micro-frequency-hopping multiple access not only utilizes the spectrum resources effectively, but also greatly simplifies the complexity of networking because there is no need to consider conflicts and it is no longer necessary to design a complicated monitoring mechanism or mobilize all terminals to complete time division multiple access by timing synchronization or other mechanisms.

Those skilled in the art can understand that all or part of the processes in the methods of the above embodiments can be realized through computer programs to instruct related hardware, and the programs can be stored in a non-volatile computer-readable storage medium. When the program is performed, the processes of the embodiments of the above-mentioned methods can be included. Any references to memory, storage, database or other media used in the embodiments provided in the present application may include non-volatile and/or volatile memories. Nonvolatile memories can include read only memory (ROM), programmable ROM (PROM), electrically programmable ROM (EPROM), electrically erasable programmable ROM (EEPROM), or flash memory. Volatile memories can include random access memory (RAM) or external cache memory. By way of illustration but not limitation, RAM is available in many forms such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM), Rambus Direct RAM (RDRAM), Direct Rambus Dynamic RAM (DRDRAM), and Rambus Dynamic RAM (RDRAM), etc.

It should be noted that, herein, relative terms such as "first" and "second" are only used to distinguish one entity or operation from another entity or operation, and do not necessarily require or imply any such actual relationship or order existing between these entities or operations. Furthermore, the term "comprise", "consist" or any other variations refers to a non-exclusive inclusion such that a process, method, article, or apparatus comprising a serious of elements includes not only such elements, but also includes elements not expressly listed, or other elements inherent in such a process, method, article, or device. Without further limitations, an element defined by the phrase "comprising a ..." does not exclude the presence of additional identical elements in the process, method, article or apparatus comprising said element.

The above descriptions are only specific embodiments of the present disclosure, so that those skilled in the art can understand or implement the present disclosure. Various modifications to these embodiments will be readily apparent to those skilled in the art, and the general principles defined herein can be implemented in other embodiments without departing from the spirit or scope of the present disclosure. Therefore, the present disclosure will not be limited to the embodiments described herein, but is to be accorded the widest scope consistent with the principles and novel features claimed herein.

**Claims**

**1.** A micro-frequency-hopping method, comprising:

dividing a baseband time-frequency resource in a frequency domain direction with a subcarrier frequency point as a basic unit and in a time domain direction with a sampling point as a basic unit; and
performing frequency hopping on a time domain baseband signal with the subcarrier frequency point as the basic unit in the frequency domain direction and with the sampling point as the basic unit in the time domain direction, wherein
the frequency hopping with the subcarrier frequency point as the basic unit in the frequency domain direction comprising:
a frequency hopping range of the time domain baseband signal being any subcarrier frequency point within a baseband bandwidth; and

the frequency hopping with the sampling point as the basic unit in the time domain direction comprising:
performing frequency hopping with each sampling point of each symbol of the time domain baseband signal independently.

2. The method according to claim 1, further comprising:
performing micro-frequency-hopping at a sending end, comprising:

the signal before the micro-frequency-hopping at the sending end being a time domain subcarrier signal transformed from a frequency domain baseband signal, and
performing micro-frequency-hopping on the time domain subcarrier signal with the sampling point as the unit according to a preset micro-frequency-hopping pattern;
wherein the micro-frequency-hopping pattern refers to a time-frequency resource occupancy pattern in a time-frequency resource matrix consisting of all subcarrier frequency points within the baseband bandwidth and all sampling points within a symbol time, and wherein any of the sampling points occupies and only uses one subcarrier frequency point.

3. The method according to claim 1 or 2, further comprising:
performing de-micro-frequency-hopping at a receiving end, comprising:

performing de-micro-frequency-hopping on the received time domain baseband sampling signal with the sampling point as the unit according to the preset micro-frequency-hopping pattern at the receiving end, and
further transforming the time domain signal after the de-micro-frequency-hopping into the frequency domain baseband signal.

4. The method according to claim 2 or 3, wherein said micro-frequency-hopping on the time domain subcarrier signal with the sampling point as the unit according to the preset micro-frequency-hopping pattern comprises:

performing a dot product between each sampling point of the subcarrier signal before the micro-frequency-hopping and the micro-frequency-hopping signal generated according to the preset micro-frequency-hopping pattern, or
rotating each sampling point of the subcarrier signal before the micro-frequency-hopping by a micro-frequency-hopping angle generated according to the preset micro-frequency-hopping pattern;
wherein the micro-frequency-hopping angle refers to an angle obtained by multiplying the subcarrier frequency point and the sampling time point according to the micro-frequency-hopping pattern, and the micro-frequency-hopping signal refers to a complex signal based on the micro-frequency-hopping angle.

5. The method according to claim 3 or 4, wherein said de-micro-frequency-hopping on the received time domain baseband sampling signal with the sampling point as the unit according to the preset micro-frequency-hopping pattern comprises:

performing a dot product between each sampling point of the received time domain baseband signal and a conjugate of the micro-frequency-hopping signal generated according to the preset micro-frequency-hopping pattern, or
reversely rotating each sampling point of the received time domain baseband signal by the micro-frequency-hopping angle according to the preset micro-frequency-hopping pattern.

6. The method according to any one of claims 2 to 5, wherein said micro-frequency-hopping and de-micro-frequency-hopping according to the preset micro-frequency-hopping pattern further comprises:

superimposed use of the micro-frequency-hopping pattern, continuous use of the micro-frequency-hopping pattern and extended use of the micro-frequency-hopping pattern;
the superimposed use of the micro-frequency-hopping pattern comprises:

performing micro-frequency-hopping on multiple subcarrier signals of one symbol according to the respective micro-frequency-hopping patterns at the sending end, and performing de-micro-frequency-hopping on the received sampling signal of one symbol according to multiple different micro-frequency-hopping patterns at the receiving end, or

performing micro-frequency-hopping on a subcarrier signal of one symbol according to multiple micro-frequency-hopping patterns at the sending end, and performing de-micro-frequency-hopping on the received sampling signal of one symbol according to different micro-frequency-hopping patterns at the receiving end;

the continuous use of the micro-frequency-hopping pattern comprises:

performing micro-frequency-hopping on the subcarrier signal of one symbol according to multiple micro-frequency-hopping patterns continuously in multiple at the sending end; and
performing de-micro-frequency-hopping on the received sampling signal of one symbol according to multiple micro-frequency-hopping patterns continuously in multiple at the receiving end; and

the extended use of the micro-frequency-hopping pattern comprises:

performing micro-frequency-hopping on the subcarrier signal of multiple symbols according to different micro-frequency-hopping patterns at the sending end; and
performing de-micro-frequency-hopping on the received sampling signal of continuous symbols according to different micro-frequency-hopping patterns at the sending end.

7. A micro-frequency-hopping multiple access communication system, wherein a baseband signal of a single user for micro-frequency-hopping is a baseband signal comprising only one subcarrier in one symbol, and micro-frequency-hopping and de-micro-frequency-hopping on a communication signal through the method according to any one of claims 1 to 6 comprising:

performing micro-frequency-hopping on the baseband signal, comprising only one subcarrier in one symbol, of each user using preset uncorrelated micro-frequency-hopping patterns among multiple users;
sending the micro-frequency-hopping signals that use the preset uncorrelated micro-frequency-hopping patterns for micro-frequency-hopping at any time at the sending ends of the multiple users; and
performing de-micro-frequency-hopping using respective micro-frequency-hopping patterns at the respective receiving ends of the multiple users, to obtain the related time domain signals corresponding to the micro-frequency-hopping signals at the respective sending ends;
wherein said sending at any time at the sending ends of the multiple users comprises:

sending the micro-frequency-hopping signals of the multiple users at a base station side simultaneously, and
sending the micro-frequency-hopping signals of the multiple users at a base station side independently, and
sending the micro-frequency-hopping signals of the multiple users at a terminal side independently;

wherein said baseband signal comprising only one subcarrier in one symbol comprises a baseband mFSK signal.

8. The system according to claim 7, wherein said uncorrelated micro-frequency-hopping signals comprise:

performing linear micro-frequency-hopping on said baseband mFSK signal to obtain uncorrelated ZC sequence signals, wherein
said uncorrelated ZC sequence signals comprise all ZC sequence signals root values of which are prime to lengths of the ZC sequence signal;
when performing the linear micro-frequency-hopping, the subcarrier frequency points in the micro-frequency-hopping pattern vary in a linear law, with the sampling points in a normal order or being shift.

9. The system according to claim 7 or 8, wherein said uncorrelated micro-frequency-hopping signals comprise:

performing pseudo-random micro-frequency-hopping on the baseband mFSK signal to obtain uncorrelated pseudo-random micro-frequency-hopping signals,
wherein the pseudo-random micro-frequency-hopping refers to that when performing the micro-frequency-hopping, the subcarrier frequency points in the micro-frequency-hopping pattern vary in a pseudo-random law, with the sampling points in a normal order, being shift or a pseudo-random order.

10. The system according to claim 8 or 9, wherein pilot signals of the micro-frequency-hopping multi-user communication system adopt uncorrelated ZC sequence signals generated by mFSK linear micro-frequency-hopping for time-frequency estimation at the receiving end;

data signal of the micro-frequency-hopping multi-user communication system adopts uncorrelated ZC sequence signals generated by mFSK linear micro-frequency-hopping or uncorrelated pseudo-random signals generated by mFSK pseudo-random micro-frequency-hopping.

Frequency

Bandwidth

Subcarrier

OFDM symbol

OFDM sub-frame

Time

FIG. 1

FIG. 2

FIG. 3

Frequency hopping template based on
subcarrier and sampling point in M*M

Micro-freque
ncy hopping
template

Micro-freque
ncy hopping
signal

Micro-freque
ncy hopping
template

Micro-frequency
hopping signal
conjugation

Sending signal

IFFT (M point)

Dot product
of signal

Channel

Dot product
of signal

IFFT (M point)

Receiving signal

Baseband symbol composed of a single
or multiple subcarriers, with each
symbol having M sampling points

FIG. 4

FIG. 5

FIG. 6

## INTERNATIONAL SEARCH REPORT

| International application No. |
|---|
| **PCT/CN2021/128035** |

### A.    CLASSIFICATION OF SUBJECT MATTER

H04J 13/00(2011.01)i

According to International Patent Classification (IPC) or to both national classification and IPC

### B.    FIELDS SEARCHED

Minimum documentation searched (classification system followed by classification symbols)

H04J,H04B

Documentation searched other than minimum documentation to the extent that such documents are included in the fields searched

Electronic data base consulted during the international search (name of data base and, where practicable, search terms used)

CNPAT, WPI, EPODOC, CNKI, IEEE, 3GPP: 跳频, 微跳频, 子载波, 频点, 采样点, 符号, 码元, 频域, 时域, 图样, 图案, FH, frequency, hopping, micro, subcarrier, symbol, sampl+, point, time, domain, pattern

### C.    DOCUMENTS CONSIDERED TO BE RELEVANT

| Category* | Citation of document, with indication, where appropriate, of the relevant passages | Relevant to claim No. |
|---|---|---|
| PX | CN 112564843 A (WUXI ZETAI MICROELECTRONICS CO., LTD.) 26 March 2021 (2021-03-26)<br>claims 1-10 | 1-10 |
| X | WO 2019096030 A1 (HUAWEI TECHNOLOGIES CO., LTD.) 23 May 2019 (2019-05-23)<br>description page 5 line 36 to page 6 line 15 | 1 |
| A | CN 102647204 A (TIANGONG UNIVERSITY) 22 August 2012 (2012-08-22)<br>entire document | 1-10 |
| A | CN 111510183 A (BEIJING INSTITUTE OF TECHNOLOGY) 07 August 2020 (2020-08-07)<br>entire document | 1-10 |
| A | CN 110808822 A (NORTHWEST UNIVERSITY) 18 February 2020 (2020-02-18)<br>entire document | 1-10 |
| A | US 2007133462 A1 (TELEFONAKTIEBOLAGET LM ERICSSON (PUBL)) 14 June 2007 (2007-06-14)<br>entire document | 1-10 |
| A | NEC. "Frequency hopping schemes for LTE Rel-13 MTC"<br>*3GPP TSG RAN WG1 Meeting #80 R1-150286*, 13 February 2015 (2015-02-13),<br>entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 January 2022** | **26 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/128035**

| Patent document cited in search report | | | Publication date (day/month/year) | Patent family member(s) | | | Publication date (day/month/year) |
|---|---|---|---|---|---|---|---|
| CN | 112564843 | A | 26 March 2021 | None | | | |
| WO | 2019096030 | A1 | 23 May 2019 | US | 2020366334 | A1 | 19 November 2020 |
| | | | | CN | 109842432 | A | 04 June 2019 |
| | | | | EP | 3609264 | A1 | 12 February 2020 |
| | | | | IN | 201917044957 | A | 08 May 2020 |
| CN | 102647204 | A | 22 August 2012 | None | | | |
| CN | 111510183 | A | 07 August 2020 | None | | | |
| CN | 110808822 | A | 18 February 2020 | None | | | |
| US | 2007133462 | A1 | 14 June 2007 | EP | 1955508 | A2 | 13 August 2008 |
| | | | | WO | 2007064286 | A2 | 07 June 2007 |
| | | | | TW | 200729763 | A | 01 August 2007 |
| | | | | EP | 2824864 | A1 | 14 January 2015 |

Form PCT/ISA/210 (patent family annex) (January 2015)

**REFERENCES CITED IN THE DESCRIPTION**

**Patent documents cited in the description**

- WO 202011303407 A
- CN 109526064 A
- CN 110278617 A